# EUROPEAN PATENT APPLICATION

(11) **EP 2 725 805 A1**
(43) Date of publication of application: **30.04.2014**
(21) Application number: 12830497.9
(22) Date of filing: 27.08.2012
(51) Int. Cl.: H04N 13/02, G03B 17/18, G03B 35/08, G09G 3/20, G09G 5/00, G09G 5/36, G09G 5/377, G09G 5/391

(54) **VIDEO SIGNAL PROCESSING APPARATUS AND VIDEO SIGNAL PROCESSING METHOD**

(30) Priority: 06.09.2011 JP 2011193493
(71) Applicant: Sony Corporation, Tokyo 108-0075 (JP)
(72) Inventor: SUDO, Ichiro, Tokyo 108-0075 (JP); MIMOTO, Kiyoshi, Tokyo 108-0075 (JP); NAGANO, Hidetoshi, Tokyo 108-0075 (JP)
(74) Representative: Turner, James Arthur
(86) International application number: PCT/JP2012/005345
(87) International publication number: WO 2013/035261

(57) **Abstract**

[Object] To provide a part, which seems to be provided with an excessive 3D effect, to a user with use of a user interface with which the user easily grasps the part intuitively.

[Solving Means] Edge extraction information indicating whether a pixel of interest is an edge part is generated, with a video signal for left eye or a video signal for right eye being used as an input signal, the video signal for left eye being captured for a left eye, the video signal for right eye being captured for a right eye. Subsequently, based on the video signal for left eye and the video signal for right eye, a parallax between a captured image for left eye that is formed of the video signal for left eye and a captured image for right eye that is formed of the video signal for right eye is calculated. Subsequently, a warning color image is generated by superimposing a plurality of kinds of warning colors on respective pixels, the plurality of kinds of warning colors each being associated with a magnitude of the calculated parallax. Subsequently, based on the edge extraction information, the warning color image is output in a case where the pixel of interest is the edge part, and the video signal for left eye or the video signal for right eye is output in a case where the pixel of interest is not the edge part.

## Description

### Technical Field

The present disclosure relates to a video signal processing apparatus suitable for use in a stereoscopic imaging apparatus that captures a stereoscopic image and to a video signal processing method therefor.

### Background Art

In recent years, a stereoscopic imaging apparatus that captures a left eye image and a right eye image has been known. A stereoscopic effect of a stereoscopic image is expressed by a parallax that is a deviation amount between the left eye image and the right eye image. In the case where the parallax is set to be zero, a reproduction position of the stereoscopic image coincides with a display screen of a display or the like. In the case where the left eye image has a parallax in the right direction with respect to the right eye image, the stereoscopic image is reproduced toward the front side of the display. Conversely, in the case where the left eye image has a parallax in the left direction with respect to the right eye image, the stereoscopic image is reproduced as an image with a depth.

Such a pop-up amount in the frontward direction of the stereoscopic image or such a depth amount in the depth direction of the stereoscopic image can be adjusted by a change in the amount of the parallax. However, an excessive parallax disables a viewer from fusing stereoscopic images or causes visual fatigue and a feeling of discomfort of the viewer. For that reason, in the stereoscopic imaging apparatus, a video signal processing apparatus that inputs right and left parallax images from the stereoscopic imaging apparatus to perform image processing, and the like, various methods for preventing videos that cause a feeling of discomfort of the viewer from being captured and/or recorded are implemented. For example, Patent Document 1 discloses that the prevention of focus position deviation in a left imaging system and a right imaging system makes it possible to obtain a stereoscopic image that is easily stereoscopically viewed with less eye-fatigue.

Patent Document 1: Japanese Patent Application Laid-open No. 2011-28053

### Summary of Invention

### Problem to be solved by the Invention

Further, there is also known a technique of, in the case where a parallax of the right and left parallax images is excessively large and an excessive 3D effect seems to be provided, informing (warning) a user of the excessive 3D effect on a display screen. Whether an excessive 3D effect seems to be provided to a certain part is determined based on, for example, a magnitude of a distance between feature points extracted from the right and left parallax images. It is determined that, in the case where the distance between the feature points is too large, there is a risk that a pop-up amount or a depth amount of a stereoscopic image are provided excessively. A warning on the display screen is performed by superimposing a warning color, which differs in accordance with the distance between the feature points of the right and left parallax images, on the extracted feature points for display. Alternatively, a warning is also expressed by a histogram in which the horizontal axis represents the distance between the feature points and the vertical axis represents the total number of pixels having that distance, for example.

In this technique, however, the magnitude of the parallax between the right and left parallax images is detected only at a specific part on the screen, and thus the warning color is also displayed only at the specific part that has been subjected to the parallax detection. In the case where the warning is expressed by a histogram, the warning color is displayed on a graph that has no relationship with the images. For that reason, there has been a problem that it is difficult for a user to intuitively grasp a part that seems to be provided with an excessive 3D effect on the display screen.

The present disclosure has been made in view of the circumstances as described above, and it is an object of the present disclosure to provide a part, which seems to be provided with an excessive 3D effect, to a user with use of a user interface with which the user easily grasps the part intuitively.

### Means for solving the Problem

To solve the above-mentioned problem, a video signal processing apparatus according to the present disclosure has a configuration including an edge extraction information generation unit, a warning color image generation unit, and an output signal control unit, and configurations and functions of the respective units are provided as follows. The edge extraction information generation unit generates edge extraction information indicating whether a pixel of interest is an edge part, with a video signal for left eye or a video signal for right eye being used as an input signal, the video signal for left eye being captured for a left eye, the video signal for right eye being captured for a right eye. The warning color image generation unit calculates, based on the video signal for left eye and the video signal for right eye, a parallax between a captured image for left eye that is formed of the video signal for left eye and a captured image for right eye that is formed of the video signal for right eye. Further, the warning color image generation unit generates a warning color image by superimposing a plurality of kinds of warning colors on respective pixels, the plurality of kinds of warning colors each being associated with a magnitude of the calculated parallax. The output signal control unit outputs the warning color image generated by the warning color image generation unit in a case where the pixel of interest is the edge part based on the edge extraction information generated by the edge extraction information generation unit. The output signal control unit outputs the video signal for left eye or the video signal for right eye in a case where the pixel of interest is not the edge part.

Further, to solve the above-mentioned problem, a video signal processing method according to the present disclosure is performed by the following procedure. First, edge extraction information indicating whether a pixel of interest is an edge part is generated, with a video signal for left eye or a video signal for right eye being used as an input signal, the video signal for left eye being captured for a left eye, the video signal for right eye being captured for a right eye. Subsequently, based on the video signal for left eye and the video signal for right eye, a parallax between a captured image for left eye that is formed of the video signal for left eye and a captured image for right eye that is formed of the video signal for right eye is calculated. Subsequently, a warning color image is generated by superimposing a plurality of kinds of warning colors on respective pixels, the plurality of kinds of warning colors each being associated with a magnitude of the calculated parallax. Subsequently, based on the edge extraction information, the warning color image is output in a case where the pixel of interest is the edge part, and the video signal for left eye or the video signal for right eye is output in a case where the pixel of interest is not the edge part.

With such a configuration and processing, the magnitude of the parallax between the right and left parallax images, that is, the depth in the depth direction of the stereoscopic image with respect to the display screen is displayed by superimposing different warning colors on pixels for which edge extraction information is detected. Specifically, an edge part serving as a part that seems to cause a risk of an excessive 3D effect is displayed by superimposing warning colors differing in accordance with a depth on the part.

### Effect of the Invention

With the video signal processing apparatus and the video signal processing method accoridng to the present disclosure, a part that seems to cause a risk of an excessive 3D effect can be provided to a user with use of a user interface with which the user easily grasps the part intuitively.

### Brief Description of Drawings

[Fig. 1] A block diagram showing a configuration example of a stereoscopic imaging apparatus according to an embodiment of the present disclosure.
[Fig. 2] A block diagram showing a configuration example of a warning image generation processing unit according to the embodiment of the present disclosure.
[Fig. 3] An explanatory diagram showing an example of edge extraction processing according to the embodiment of the present disclosure, in which (a) shows an example of a filter for extracting an edge in a vertical direction and (b) shows an example of a filter for extracting an edge in a horizontal direction.
[Fig. 4] An explanatory diagram showing an example of edge extraction processing and binarization processing according to the embodiment of the present disclosure, in which (a) shows an example of an original image before the edge extraction processing is performed, (b) shows an example of an image after the edge extraction processing is performed, and (c) shows an example of a binarized image.
[Fig. 5] A block diagram showing a configuration example of a delay circuit according to the embodiment of the present disclosure.
[Fig. 6] An explanatory diagram showing an example of resolution reduction processing accoridng to the embodiment of the present disclosure, in which (a) shows an example of an original image before the resolution reduction processing is performed and (b) shows an example of an image in which a resolution is reduced.
[Fig. 7] An explanatory diagram showing an example of parallax calculation processing according to the embodiment of the present disclosure, in which (a) shows an example of a left eye image to be a target of the parallax calculation processing and (b) shows an example of a right eye image to be a target of the parallax calculation processing.
[Fig. 8] An explanatory diagram showing an example of color-coding processing according to the embodiment of the present disclosure.
[Fig. 9] A flowchart showing an example of switching processing of a swtich according to the embodiment of the present disclosure.
[Fig. 10] A diagram showing an example of an image in which a warning image is superimposed accoridng to the embodiment of the present disclosure.
[Fig. 11] A block diagram showing a configuration example of a video signal processing apparatus according to a modified example of the present disclosure.

### Mode(s) for Carrying Out the Invention

Hereinafter, a specific example of a video signal processing apparatus according to an embodiment of the present disclosure will be described with reference to the drawings in the following order.
1. Configuration example when video signal processing apparatus is applied to stereoscopic imaging apparatus
2. Example of configuration and processing of warning color image generation processing unit
3. Various modified examples

### <1. Configuration Example of Video Signal Processing Apparatus>

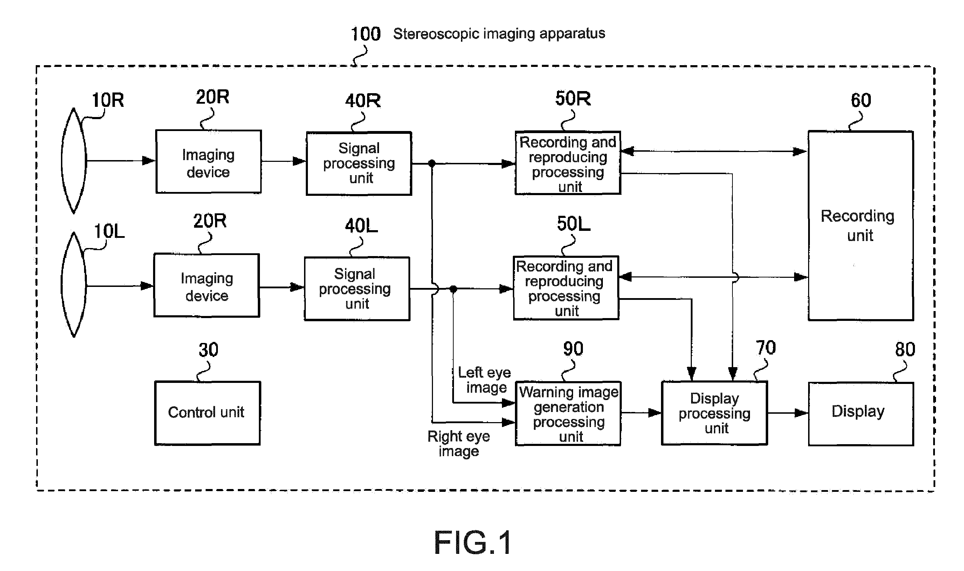

First, a configuration example of a video signal processing apparatus according to an emboidmnet of the present disclosure will be described. In this embodiment, a description will be given while the video signal processing apparatus is applied to a stereoscopic imaging apparatus including an imaging system for a left eye image and an imaging system for a right eye image. Fig. 1 is a block diagram showing an internal configuration example of a stereoscopic imaging apparatus 100.

The stereoscopic imaging apparatus 100 includes a lens 10R, an imaging device 20R, a signal processing unit 40R, and a recording and reproducing processing unit 50R as a processing system for a right eye image. Further, the stereoscopic imaging apparatus 100 includes a lens 10L, an imaging device 20L, a signal processing unit 40L, and a recording and reproducing processing unit 50L as a processing system for a left eye. The units that form the processing system for a right eye image and the like and the units that form the processing system for a left eye image and the like have the same functions, and thus the functions of the respective units of only the processing system for a right eye image will be described.

The lens 10R is a lens for captuing a right eye image and is constituted of a large number of pieces and groups of lenses, filters, diaphragms, lens drive mechanisms, and the like. In addition to those mechanisms, a zoom function, a focusing function, and other functions may be provided. The imaging device 20R is constituted of a device such as a CCD (Charge Coupled Device) or a CMOS (Complementary Metal Oxide Semiconductor). The imaging device 20R includes a plurality of photoelectric conversion elements that are two-dimentioally arranged on a light-receiving surface of the imaging device 20R. Each of the photoelectric conversion elements forms a pixel, and a position of each photoelectric conversion element on an imaging surface corresopnds to a pixel position. Each of the photoelectric conversion elements accumulates signal charge that corresopnds to an amount of light from a subject whose image is formed on the light-receiving surface. The signal charge accumulated in each photoelectric conversion element is read out under the control of a control unit 30 constituted of a CPU (Central Processing Unit) and the like and is output to the signal processing unit 40R.

The signal processing unit 40R includes a CDS (Correlated Double Sampling) circuit and an AGC (Automatic Gain Control) circuit. The CDS circuit removes noise included in the signal charge that has been read out from the imaging device 20R. The AGC circuit controls a level of the signal, from which noise has been removed, to be constant. The signal processing unit 40R also includes an A/D (Analog-to-Digital) converter that converts an analog video signal that have been subjected to the processing described above into a digital video signal. It should be noted that in the case where the imaging device 20R is constituted of a CMOS device, those processing are performed in the imaging device 20R.

The recording and reproducing processing unit 50R performs processing of compressing the video signal, which has been subjected to the signal processing by the signal processing unit 40R, in a predetermined format and processing of extending an input compressed image, based on the control of the control unit 30. The compressed video signal is recorded in a recoring unit 60 constituted of a videotape, an HDD (Hard Disc Drive), a memory card, or the like. The video signal that is read out from the the recoring unit 60 and compressed is output to a display processing unit 70. The display processing unit 70 performs processing for causing a dislay 80, which is constituted of an LCD (Liquid Crystal Display) or the like, to display the video signal. The dislay 80 is constituted as a viewfinder.

A warning image generation processing unit 90 calculates a parallax between right and left parallax images based on a video signal for right eye, which is input from the signal processing unit 40R, and a video signal for left eye, which is input from the signal processing unit 40L, and superimposes warning colors on an edge part of the subject for output. The warning colors differ in accordance with a magnitude of a parallax. A warning image with the warning colors superimposed thereon is supplied to the display processing unit 70 and then displyaed on the dislay 80 by the display processing unit 70.

It should be noted that the stereoscopic imaging apparatus 100 includes a mechanism for optically adjusting a convergence (an angle of convergence) by the control on an orientation of the lens and the like, or a convergence-angle control unit that mechanically adjusts a convergence by a rotation or a movement of the whole lenses, though not shown in Fig. 1. When a user adjusts a convergence or a zoom such that the warning colors displayed on the screen are not displayed, a parallax in captured images falls within a proper range. Specifically, a stereoscopic image is prevented from being provided with an excessive 3D effect.

### <2. Example of Configuration and Processing of Warning Image Generation Processing Unit>

### [2-1. Configuration Example of Warning Image Generation Processing Unit]

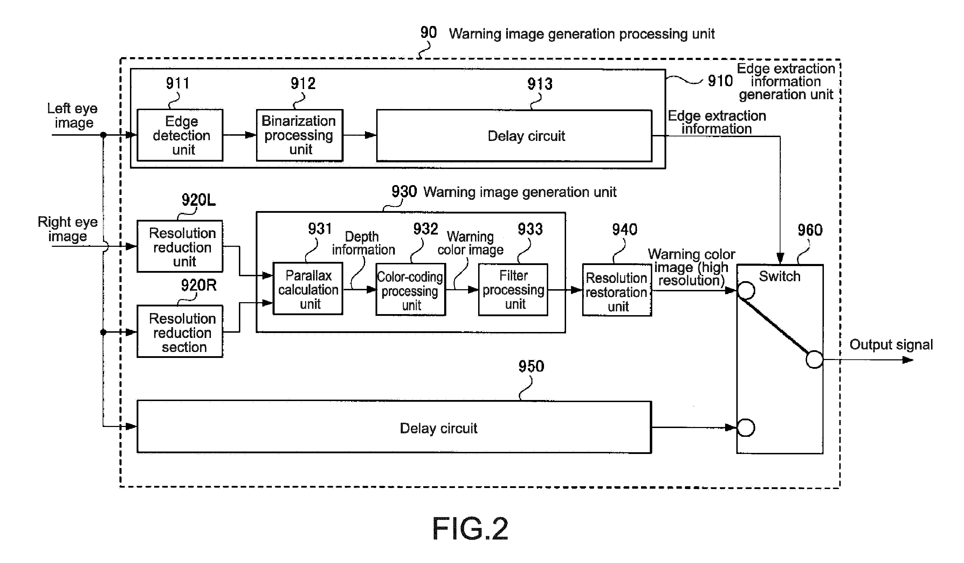

Fig. 2 is a block diagram showing a configuration example of the warning image generation processing unit 90. The warning image generation processing unit 90 includes an edge extraction information generation unit 910, resolution reduction units 920L and 920R, a warning image generation unit 930, a resolution restoration unit 940, a delay circuit 950, and a switch 960 serving as an output signal control unit.

The edge extraction information generation unit 910 includes an edge detection unit 911, a binarization processing unit 912, and a delay circuit 913. The edge detection unit 911 extracts, based on a left eye image otuput from the signal processing unit 40L (see Fig. 1), an edge part in which a light intensity of a pixel sharply changes in the image. For the edge extraction, a filter such as a sobel filter is used, for example.

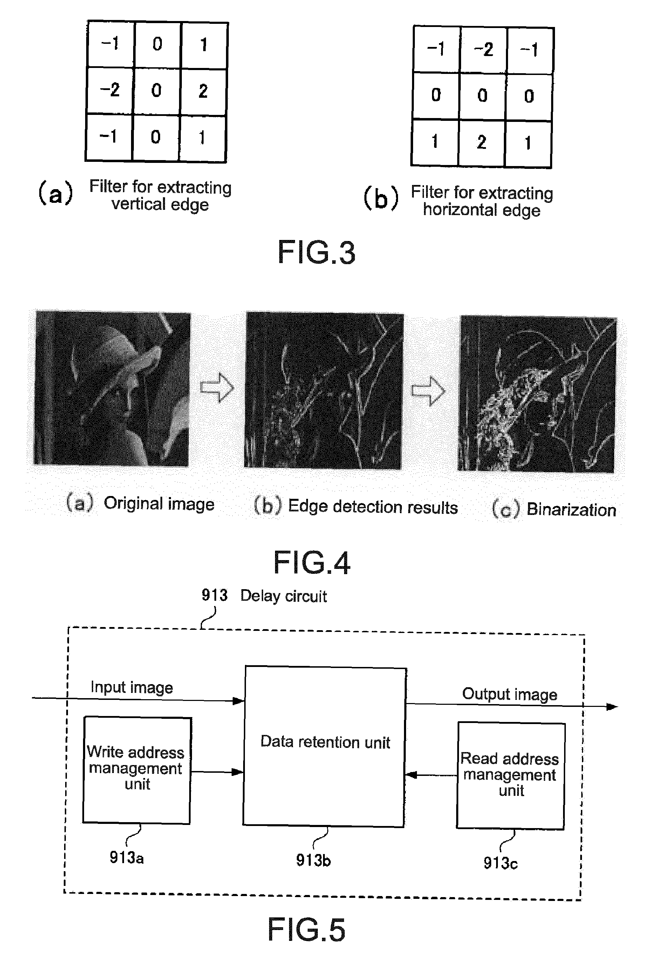

Fig. 3 shows a configuration example of a sobel filter. Fig. 3(a) is a filter for extracting an edge in a vertical direction, and Fig. 3(b) is a filter for extracting an edge in a horizontal direction. The filter for extracting the vertical edge shown in Fig. 3(a) extracts differences between a pixel of interest and each pixel on the left-side vertical row and on the right-side vertical row of the pixel of interest. The filter for extracting the horizontal edge shown in Fig. 3(b) extracts differences between a pixel of interest and each pixel on the upper-side horizontal row and on the lower-side horizontal row of the pixel of interest. By addition of those extraction results of the filters, edges in the vertical and horizontal directions of an image can be extracted.

It should be noted that an example in which the sobel filter is used has been described in this embodiment, but the edge extraction may be performed using other means such as a differential filter and a high-pass filter.

Referring back to Fig. 2 to continue the description, the binarization processing unit 912 performs threshold processing on the image output from the edge extraction information generation unit 910, to divide an area of the image into an edge area and a non-edge area. In other words, in pixels each detected as an edge part, "1" is output for pixels having a value exceeding a predetermined threshold value, and "0" is output for pixels having a value equal to or smaller than the threshold value, for example. The magnitude of the threshold value is heuristically set based on a value calculated based on rules of thumb by a designer, for example.

Alternatively, it may be configured such that the user can select any value from threshold values within a certain range. Since a thickness of an edge to be extracted differs in accordance with the magnitude of the threshold value, how a warning color superimopsed on the edge is viewed also changes in accordance with the magnitude of the threshold value. For that reason, with the configuration that allows the user to select the threshold value, the thicknes of a line (edge) on which the warning color is superimposed can be adjusted also in accordance with a thickness that the user wants.

Fig. 4(a) shows an original image input to the edge extraction information generation unit 910. The edge extraction information generation unit 910 extracts an edge and generates an image in which an edge part is extracted as shown in Fig. 4(b). Further, the binarization processing unit 912 performs the threshold processing on the image shown in Fig. 4(b), and thus the pattern of the image is expressed in two colors of black and white as shown in Fig. 4(b). In other words, the pixels are expressed in two values indicating whether each of the pixels is the edge part or not. The binarization processing unit 912 outputs a set of the binary information obtaineid by the threshold processing, which serves as edge extraction information, to the delay circuit 913 together with a vertical synchronization signal and a horizontal synchronization signal.

Referring back to Fig. 2 again to continue the description, the delay circuit 913 delays the edge extraction information output from the binarization processing unit 912 by a predetemrined period of time and then outputs the information. The amount of delay to be added by the delay circuit 913 is calculated based on a difference between a period of time from when the right and left eye images are input to the resolution reduction units 920L and 920R, which will be described later, to when a warning color image is generated, and a period of time in which the edge extraction information is generated. Since the period of time in which the warning color image is generated is longer than the period of time in which the edge extraction information is generated, the edge extraction information is provided with a delay in order to match a timing at which the warning color image is output and a timing at which the edge extraction information is output.

Fig. 5 shows a configuration example of the delay circuit 913. The delay circuit 913 includes a write address management unit 913a, a data retention unit 913b constituted of a dual port RAM (Random Access Memory) or the like, and a read address management unit 913c. The write address management unit 913a cyclically counts up an address in an addres space of the data retention unit 913b under the control of the control unit 30 (see Fig. 1). The counted-up address is applied to the data retention unit 913b as a write address. The read address management unit 913c cyclically counts up an address in an addres space of the data retention unit 913b under the control of the control unit 30. The counted-up address is applied to the data retention unit 913b as a read address.

Speifically, in the data retention unit 913b, data is written to the write address applied by the write address management unit 913a at a timing at which the write address is applied. Further, the data written in the data retention unit 913b is read out from the read address applied by the read address management unit 913c at a timing at which the read address is applied. As the differnece in address nubmer between the read address and the write address becomes larger, a period of time from when data is written in the data retention unit 913b to when the data is read out therefrom becomes longer. Speifically, this difference is set as a delay amount to be added to the edge extraction information.

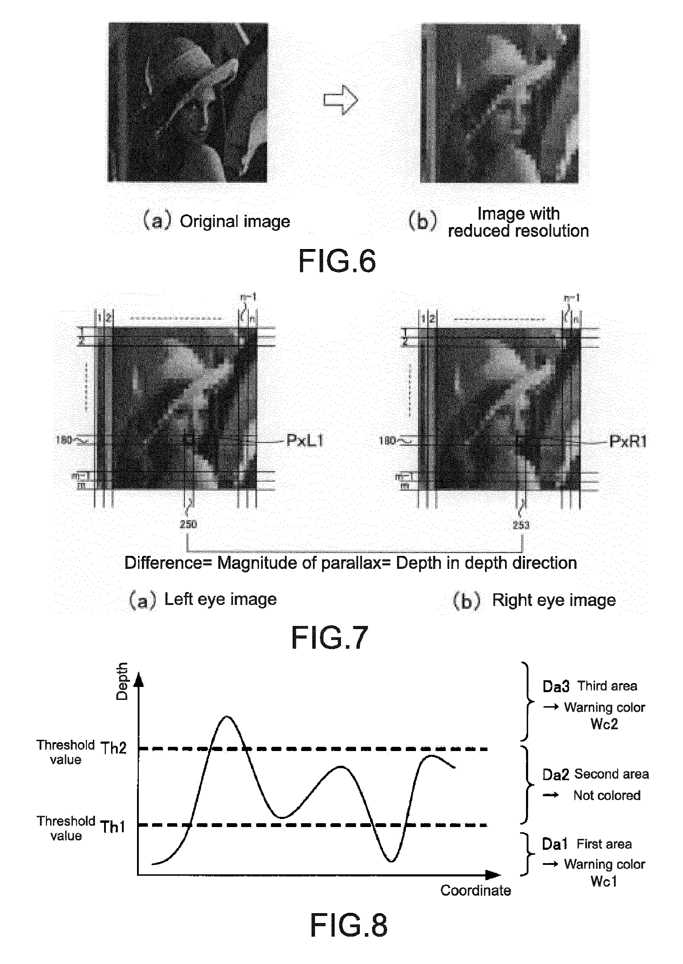

Referring back to Fig. 2 again to continue the description, the resolution reduction unit 920L converts the left eye image that is input from the signal processing unit 40L (see Fig. 1) to have a lower resolution for output. The resolution reduction unit 920R converts the right eye image that is input from the signal processing unit 40R to have a lower resolution for output. To reduce the resolution of the input image, for example, a technique of thinning-out or averaging of pixels is performed. If the vertical and horizontal pixels are thinned out by 1/4 pixels, the resolution can be reduced to 1/16. By such processing performed by the resolution reduction unit 920L and the resolution reduction unit 920R, the original image shown in Fig. 6(a) is converted into an image with a reduced resolution as shown in Fig. 6(b). Consequently, an amount of data to be input to the warning image generation unit 930 in a subsequent step (see Fig. 2) is reduced to a large extent.

The warning image generation unit 930 includes a parallax calculation unit 931, a color-coding processing unit 932, and a filter processing unit 933. The parallax calculation unit 931 calculates a parallax between pixels of the right and left images at each pixel by using the input right and left images, resolutions of which are reduced by the resolution reduction unit 920L and the resolution reduction unit 920R. Fig. 7 is a diagram showing an example of parallax calculation processing by the parallax calculation unit 931. Fig. 7(a) shows a right eye image, and Fig. 7(b) shows a left eye image. Each of the images is constituted of pixels (m x n) including n pixels in a horizontal direction by m pixels in a vertical direction.

A parallax is calculated by matching of the right and left images on a pixel-to-pixel basis and by calculation of a difference between pixel values of matched pixels. Assuming that a pixel PxL1 of the left eye image shown in Fig. 7(a) is a pixel of interest, all pixels in the 180-th row of the right eye image shown in Fig. 7(b), which are located in the same horizontal row as the pixel PxL1, are first scanned from the left end to the right direction. Subsequenly, a degree of similarity for each pixel is converted into a score and then recorded. When the scanning of all the pixels in the 180-th row is completed, a pixel at a position with the higherst score is extracted. Then, a difference between a coordinate of the extracted pixel in the horizontal direction and a coordinate of the pixel of interest PxL1 in the horizontal direction of the left eye image serving as a comparison source is calculated.

In the example shown in Fig. 7, a pixel that is the most similar to the pixel of interest PxL1 in the right eye image is a pixel PxR1. The coordinate of the pixel of interest PxL1 in the horizontal direction is "250", and the coordinate of the correspoidng pixel PxR1 in the horizontal direction is "253", and thus the differnece therebetwen is "3". This difference "3" is a value indicating an amount of deviation in the horizontal direction between the right and left images, that is, a parallax.

The magnitude of the parallax indicates a distance of the subject from the stereoscopic imaging apparatus 100. In the case where a large convergence is set at a time when an image is captured and a convergence point is formed on the stereoscopic imaging apparatus 100 side (near side), a parallax to be calculated is small. Conversely, in the case where a convergence point is formed on the subject side (depth side), a parallax to be calculated is large. In other words, it can be said that the amount of the parallax indicates a depth in a depth direction of the subject with respect to the stereoscopic imaging apparatus 100. The parallax calculation unit 931 uses the right and left images as input images to calculate a parallax and uses the magnitude of the calculated parallax as depth information to output the depth information to the color-coding processing unit 932 (see Fig. 2) together with the information on pixels.

It should be noted that the example in which the right and left images are subjected to matching on a pixel-to-pixel basis has been described in this embodiment, but the present disclosure is not limited thereto. It may be possible to extract feature points and perform matching on the feature points. In the case of the matching of feature points, however, depth information on pixels other than pixels located around the feature points cannot be obtained. Consequently, for the purpose of obtaining the depth information in the entire screen whose resolution is reduced, it is necessary to separately perform processing such as painting pixels other than the feature points that have been subjected to the detection of depth.

The color-coding processing unit 932 first performs the threshold processing on the depth information input from the parallax calculation unit 931. Fig. 8 is a diagram showing an example of color-coding processing by the color-coding processing unit 932. The vertical axis represents a depth, and the horizontal axis represents a cooridnate of a pixel. Two threshold value Th1 and threshold value Th2 each having a diffenret value are provided as threshold values. Based on those threshold values, the depth is divided into a first area Da1 having a depth equal to or larger than 0 and smaller than the threshold value Th1, a second area Da2 having a depth equal to or larger than the threshold value Th1 and smaller than the threshold value Th2, and a third area Da3 having a depth equal to or larger than the threshold value Th2.

To each area Da, a warning color corrsponding thereto is assigned in advance. In the example shown in Fig. 8, a warning color Wc1 is assinged to the first area Da1, no warning color is assinged to the second area Da2, and a warning color Wc2 is assined to the third area Da3. The color-coding processing unit 932 determines into which area of the above-mentioned areas Da the depth of a pixel that is input from the parallax calculation unit 931 is sorted, and superimposes a warning color associated with the sorted area Da on the input pixel for output.

In the case where the depth of the input pixel is sorted to the second area Da2, no warning color is superimposed. Specifically, the second area Da2 is set as an area where a warning color is not required to be displayed. Fixed values may be set in advance for the threshold value Th1 and the threshold value Th2 that determine the second area Da2, and a user may select any value from a menu screen or the like displayed on the dislay 80 (see Fig. 1).

In the case where the user is allowed to select a value, for example, a technique of allowing the user to select a value that indicates a proportion of the parallax in the width of the horizontal direction of the image in percentage may be conceived, instead of allwoing the user to select the threshold value Th1 and the threshold value Th2. When the proportion of the parallax to the horizontal width of the image is designated, the range of the second area Da2 is also defined. The "proportion of the parallax to the horizontal width of the image" in this case can be set based on information that is indicated as a "range of parallax in which confortable viewing of a screen is achieved" in guidelines for capturing stereoscopic videos or the like.

Alternatively, various types of threshold values Th1 and the threshold values Th2 may be prepared in advance for each size of the display screen on which the image is eventually output (not shown) to allow the user to select the size of the screen, so that the threshold value Th1 and the threshold value Th2 may be configured so as to be uniquely determined.

It should be noted that the example in which the two threshold values Th are provided to devide the depth into three areas has been described in this embodiment, but the present disclosure is not limited to this example. The degree of warning may be divided stepwise accoridng to the depth divided into finer areas. For example, the following technique is conceived. A red warning color is superimposed on pixels that are sorted to an area with a high possibility of a failure (possibility that an excessive 3D effect is provided), a yellow warning color is superimposed on pixels with a possibility of a failure, and a green warning color is superimposed on pixels with a slight possibility of a failure. Alternatively, only one threshold value Th may be provided to superimpose a warning color only on pixels that are sorted to an area with a small (or large) depth.

Further, in the embodiment described above, the example in which the warning colors are superimposed on pixels having an excessively large depth or an excessively small depth to warn the user has been described. However, the present disclosure is not limited thereto. Instead of colors, different textures may be assigned to the respective areas Da obtained by division of the depth. Alternatively, patterns having different intervals of blinking may be assigned to the respective areas Da.

Referring back to Fig. 2 again to continue the description, the filter processing unit 933 accummulates warning color images corresponding to a predetermined number of frames, the warning color images being input from the color-coding processing unit 932, and obtains a product of the images, to perform filtering in a time axis direction at the same pixel. For example, input pixels corresponding to several frames are accummulated to obtain a product. In the case where a single warning color is succcessively output over the several frames, the warning color is adopted. In the case where a signle warning color is not succcessively output over the several frames whose product has been obtained, the warning color is not superimposed and the pixels are output. By such processing, the possibility that noise is mixed into an output image is more reduced. The nubmer of frames whose pixels are to be accumulated can be set to any value based on information on a desired setting level of a noise removal effect, and the like.

The warning color image that has been subjected to filtering by the filter processing unit 933 is output to the resolution restoration unit 940. The resolution restoration unit 940 performs processing of restoring a resolution of the input warning color image to the original resolution. In the case where the resolution is reduced to 1/16 of the original one by the resolution reduction units 920L and 920R, for example, the original resolution is restored by arranging 16 identical pixels and then simply enlarging them. Alternatively, other methods may be used to restore the resolution. The warning color image whose resolution has been resotred by the resolution restoration unit 940 is supplied to the switch 960.

The delay circuit 950 delays the left eye image, which is output from the signal processing unit 40L (see Fig. 1), by a predetemriend period of time and then outputs the image. Specifically, a delay amount for calcelling a difference between a phase of the warning color image supplied to the switch 960 and a phase of the left eye image output from the signal processing unit 40L is added to the left eye image that is output as the original image. The configuration of the delay circuit 950 is the same as that of the delay circuit 913 described with reference to Fig. 5, and thus description of the delay circuit 950 will be omitted.

The high-resolution warning color image whose resolution has been restored and the original image whose phase is adjusted to be the same as that of the warning color image by the delay circuit 950 are supplied to the switch 960. Any one of the images is selected for output. A connection destination of the switch 960 is switched based on the edge extraction information supplied from the edge extraction information generation unit 910.

### [2-2. Example of processing of warning image generation processing unit]

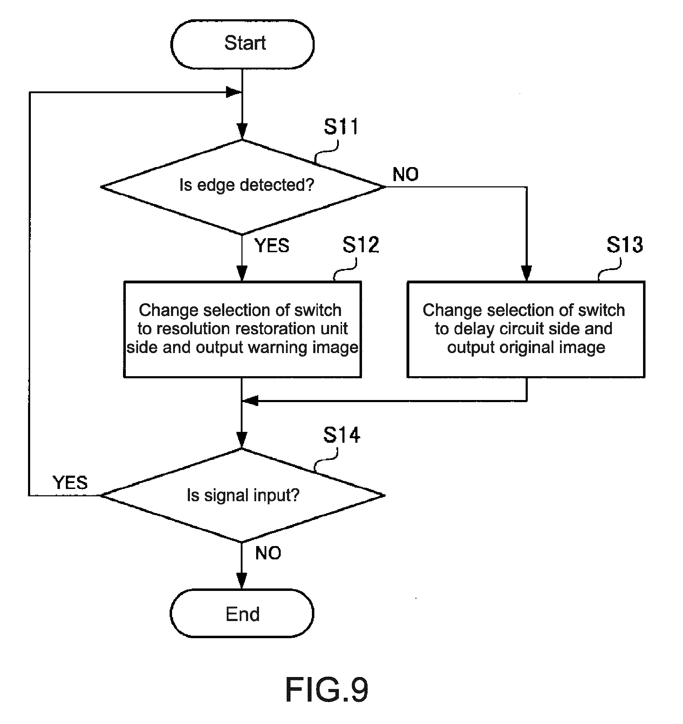

Fig. 9 is a flowchart showing an example of switching processing by the switch 960. First, it is determined whether an edge is detected based on the edge extraction information supplied from the edge extraction information generation unit 910 (Step S11). In other words, it is determined whether a pixel of interest is a pixel of an edge part. In the case where an edge is detected, a connection destination of the switch 960 is swithced to the resolution restoration unit 940 side, and the warning color image is output (Step S12). In the case where an edge is not detected, the connection destination of the switch 960 is switched to the delay circuit 950 side, and the original image is output (Step S13). Subsequently, it is determined whether a signal is input. In the case where a signal is input, the processing returns to Step S11 to continue the processing. In the case where there is no input signal, the processing is terminated.

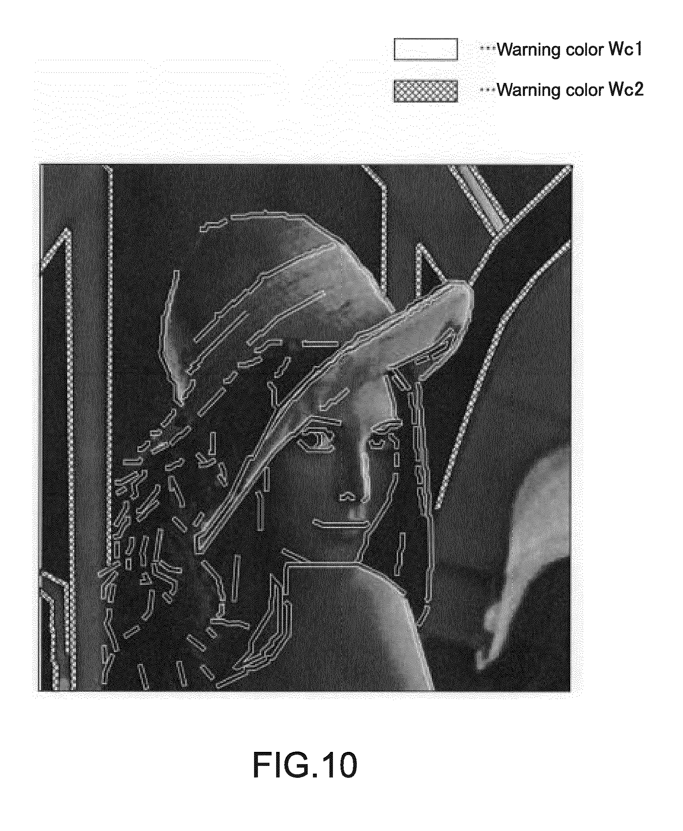

By such processing, as shown in Fig. 10, the warning colors are each superimposed on a part, which is an edge part of the subject and is provided with a large parallax, that is, a part with an extremely large pop-up amount or depth amount, and then displayed. In Fig. 10, a warning color Wc1 is superimposed on pixels that are classified into the area Da1 and have an extremely large pop-up amount, and a warning color Wc2 is superimposed on pixels that are classified into the area Da3 and have an extremely large depth amount.

According to this embodiment described above, in the case where a captured image seems to be provided with an excessive 3D effect, a warning color is superimposed on the whole edge part of the captured image for display. As a result, the user can intuitively grasp the part that seems to be provided with an excessive 3D effect. Additionally, the user who views a warning indication shown as the edge with the warning color adjusts a convergence and/or a zoom such that the warning color is not displayed, so that a parallax between right and left parallax images falls within a proper range.

Further, the edge extraction information generation unit 910 extracts an edge based on an image whose resolution is kept to be the original high resolution, and superimposes a warning color on the edge part extracted from the high-resolution image. Specifically, a warning color image is displayed in a high resolution. Such a mechanism ensures display of a warning color image in a high resolution, and thus a warning image can be generated based on an image whose resoluiton is reduced.

The depth information serving as a source for generating a warning image is calculated using the images that are reduced in resolution by the resolution reduction units 920L and 920R, and thus a processing amount of the parallax calculation processing for calculating the depth information is significantly reduced. This allows the number of resorces such as a CPU and an FPGA (Field-Programmable Gate Array), which constitue the parallax calculation unit 931, to be reduced to a large extent. Consequently, also in a video camera recorder driven by a battery, for example, a warning image with a high resplution can be generated by the video signal processing method according to the present disclosure. Specifically, only a single commercial product can lead to the ensurance of safety of a recording material in stereoscopic imaging and to the display of a warning image by a method that is easy to intuitively grasp by the user.

Further, in the embodiment described above, a parallax is calculated by using the images that are reduced in resolution by the resolution reduction units 920L and 920R, and thus a period of time taken for the parallax calculation processing is short. This allows a warning color to be displayed at a frame rate that is the same as that of a video signal. In addition, since the warning color is displayed for each frame, the visibility of a part on which the warning color is superimposed is also improved.

Furthermore, in the embodiment described above, since the warning color is superimposed on the edge part, the original shape of the subject is not lost due to display of the warning color. Specifically, the part that seems to be provided with an excessive 3D effect is more correctly expressed.

### <2. Various Modified Examples>

It should be noted that in the embodiment described above, the color-coding processing unit 932 (see Fig. 2) generates the warning image and then the resolution restoration unit 940 restores the resolution, but the order of operation may be inversed such that the resolution is first resotred and then the warning image is generated.

Further, in the embodiment described above, the filter processing by the filter processing unit 933 is perfromed, but the filter processing may not be performed.

Further, in the embodiment described above, the example in which an edge is extracted based on the left eye image has been described, but an edge may be extracted by using the right eye image. In this case, the left eye image and the right eye image serving as inputs to the warning image generation unit 930 shown in Fig. 2 are switched, and then the right eye image is input to the delay circuit 950. Alternatively, a block in which a warning image is generated based on the left eye image and a block in which a warning image is generated based on the right eye image may be provided in parallel.

Further, in the embodiment described above, the example in which the warning image generation processing unit 90 generates a warning image based on the video signals that are output from the signal processing units 40R and 40L (see Fig. 1) has been described, but the present disclosure is not limited thereto. The warning image generation processing unit 90 may be configured to generate a warning image based on video signals that are output from the recording and reproducing processing units 50R and 50L.

Further, in the embodiment described above, the example in which the video signal processing apparatus according to the present disclosure is applied to a stereoscopic imaging apparatus in which right and left imaging systems are stored in one casing has been described, but the present disclosure is not limited thereto. The video signal processing apparatus according to the present disclosure may be applied to a stereoscopic imaging apparatus that captures a stereoscopic image with use of two imaging apparatuses, i.e., an imaging apparatus that captures a right eye image and an imaging apparatus that captures a left eye image. In this case, the warning image generation processing unit 90 is provided in one of the imaging apparatuses for right and left eye images, and a video signal is introduced thereto from the other imaging apparatus to be input to the warning image generation processing unit 90. Alternatively, both of the imaging apparatuses for right and left eye images may be provided with the warning image generation processing units 90 to exchange video signals for input.

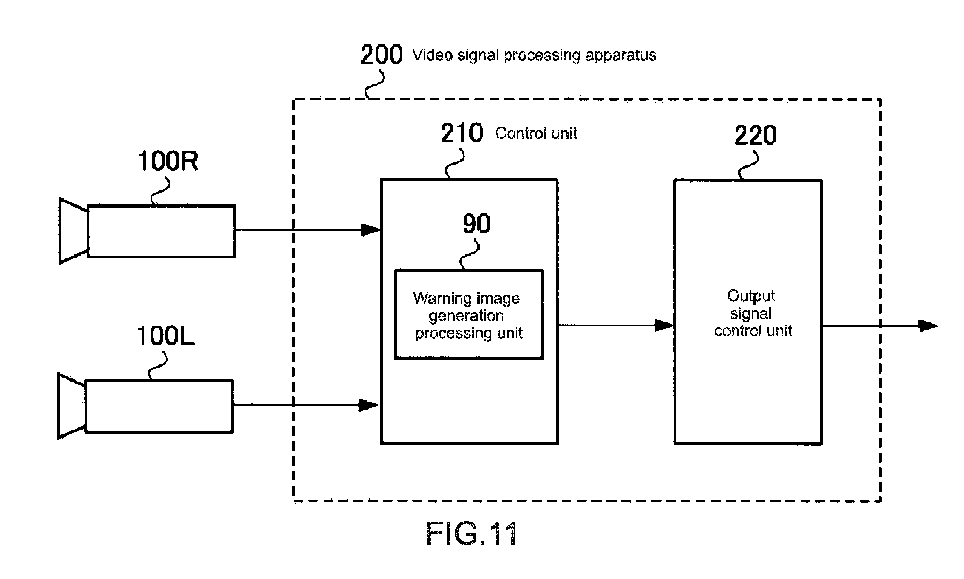

Alternatively, the video signal processing apparatus according to the present disclosure may be applied to a video signal processing apparatus that does not include an imaging system. Fig. 11 is a diagram showing a configuration example of such a video signal processing apparatus 200. The video signal processing apparatus 200 includes, for example, a control unit 210 and an output signal control unit 220. The control unit 210 performs processing of correcting alignment deviation or color deviation, or the like, based on video signals that are input from an imaging apparatus 100R for capturing a right eye image and an imaging apparatus 100L for capturing a left eye image. The control unit 210 also includes a warning image generation processing unit 90. The output signal control unit 220 converts the video signals in a format conforming to a monitor to be connected to an output terminal (not shown) for output of the signals.

Also in the case where the video signal processing apparatus according to the present disclosure is applied to the stereoscopic imaging apparatus or video signal processing apparatus as described above, the same effects as those produced by the embodiment described above can be obtained.

It should be noted that the present disclosure may take the following configurations.
(1) A video signal processing apparatus, including:
   an edge extraction information generation unit to generate edge extraction information indicating whether a pixel of interest is an edge part, with a video signal for left eye or a video signal for right eye being used as an input signal, the video signal for left eye being captured for a left eye, the video signal for right eye being captured for a right eye;
   a warning color image generation unit to calculate, based on the video signal for left eye and the video signal for right eye, a parallax between a captured image for left eye that is formed of the video signal for left eye and a captured image for right eye that is formed of the video signal for right eye and generate a warning color image by superimposing a plurality of kinds of warning colors on respective pixels, the plurality of kinds of warning colors each being associated with a magnitude of the calculated parallax; and
   an output signal control unit to output the warning color image generated by the warning color image generation unit in a case where the pixel of interest is the edge part, and output the video signal for left eye or the video signal for right eye in a case where the pixel of interest is not the edge part, based on the edge extraction information generated by the edge extraction information generation unit.
(2) The video signal processing apparatus according to (1), further including:
   a resolution reduction unit to convert a resolution of the video signal for left eye and that of the video signal for right eye to a predetermined low resolution for output to the parallax calculation unit; and
   a resolution restoration unit to restore a resolution of the warning color image or the resolution of the video signal at a stage where the parallax is calculated, to a resolution before a resolution reduction is performed by the resolution reduction unit.
(3) The video signal processing apparatus according to (1) or (2), in which
   the warning image generation unit divides a depth that is a distance in a depth direction of a subject with respect to an imaging apparatus and is indicated as a magnitude of the calculated parallax, into at least two areas by using a first threshold value and does not associate the warning color to an area with a value equal to or larger than the first threshold value or an area with a value smaller than the first threshold value.
(4) The video signal processing apparatus according to any one of (1) to (3), further including
   a filter processing unit to filter the warning image in a time axis direction by accumulating warning images corresponding to a predetermined number of frames and obtaining a product thereof.
(5) The video signal processing apparatus according to any one of (1) to (4), further including
   an imaging device for right eye and an imaging device for left eye that photoelectrically convert subject light to generate a video signal.
(6) The video signal processing apparatus according to any one of (1) to (5), in which
   a plurality of kinds of values of the first threshold value and the second threshold value are provided to correspond to a size of a display apparatus to which the video signal output from the output signal control unit is input.
(7) A video signal processing method, including:
   generating edge extraction information indicating whether a pixel of interest is an edge part, with a video signal for left eye or a video signal for right eye being used as an input signal, the video signal for left eye being captured for a left eye, the video signal for right eye being captured for a right eye;
   calculating, based on the video signal for left eye and the video signal for right eye, a parallax between a captured image for left eye that is formed of the video signal for left eye and a captured image for right eye that is formed of the video signal for right eye and generating a warning color image by superimposing a plurality of kinds of warning colors on respective pixels, the plurality of kinds of warning colors each being associated with a magnitude of the calculated parallax; and
   outputting the warning color image in a case where the pixel of interest is the edge part, and outputting the video signal for left eye or the video signal for right eye in a case where the pixel of interest is not the edge part, based on the edge extraction information.
(8) A video signal processing apparatus, which generates a video signal displayed by superimposing a warning color on a pixel, the warning color differing in accordance with an amount of the parallax, the pixel being determined to be an edge part and having a parallax that is a distance between a captured image for right eye and a captured image for left eye on a display screen and exceeds a predetermined range.

### Description of Symbols

- 10L: lens
- 10R: lens
- 20L: imaging device
- 20R: imaging device
- 30: control unit
- 40L: signal processing unit
- 40R: signal processing unit
- 50L: recording and reproducing processing unit
- 50R: recording and reproducing processing unit
- 60: recoring unit
- 70: display processing unit
- 80: dislay
- 90: warning image generation processing unit
- 100: stereoscopic imaging apparatus
- 100L: imaging apparatus
- 100R: imaging apparatus
- 200: video signal processing apparatus
- 210: control unit
- 220: output signal control unit
- 910: edge extraction information generation unit
- 911: edge detection unit
- 912: binarization processing unit
- 913: delay circuit
- 913a: write address management unit
- 913b: data retention unit
- 913c: read address management unit
- 920L: resolution reduction unit
- 920R: resolution reduction unit
- 930: warning image generation unit
- 931: parallax calculation unit
- 932: processing unit
- 933: filter processing unit
- 940: resolution restoration unit
- 950: delay circuit
- 960: switch
- Da1: first area
- Da2: second area
- Da3: third area
- Th1, Th2: threshold value
- Wc1, Wc2: warning color

## Claims

1. A video signal processing apparatus, comprising:
an edge extraction information generation unit to generate edge extraction information indicating whether a pixel of interest is an edge part, with a video signal for left eye or a video signal for right eye being used as an input signal, the video signal for left eye being captured for a left eye, the video signal for right eye being captured for a right eye;
a warning color image generation unit to calculate, based on the video signal for left eye and the video signal for right eye, a parallax between a captured image for left eye that is formed of the video signal for left eye and a captured image for right eye that is formed of the video signal for right eye and generate a warning color image by superimposing a plurality of kinds of warning colors on respective pixels, the plurality of kinds of warning colors each being associated with a magnitude of the calculated parallax; and
an output signal control unit to output the warning color image generated by the warning color image generation unit in a case where the pixel of interest is the edge part, and output the video signal for left eye or the video signal for right eye in a case where the pixel of interest is not the edge part, based on the edge extraction information generated by the edge extraction information generation unit.

2. The video signal processing apparatus according to claim 1, further comprising:
a resolution reduction unit to convert a resolution of the video signal for left eye and that of the video signal for right eye to a predetermined low resolution for output to the parallax calculation unit; and
a resolution restoration unit to restore a resolution of the warning color image or the resolution of the video signal at a stage where the parallax is calculated, to a resolution before a resolution reduction is performed by the resolution reduction unit.

3. The video signal processing apparatus according to claim 2, wherein
the warning image generation unit divides a depth that is a distance in a depth direction of a subject with respect to an imaging apparatus and is indicated as a magnitude of the calculated parallax, into at least two areas by using a first threshold value and does not associate the warning color to an area with a value equal to or larger than the first threshold value or an area with a value smaller than the first threshold value.

4. The video signal processing apparatus according to claim 3, further comprising
a filter processing unit to filter the warning image in a time axis direction by accumulating warning images corresponding to a predetermined number of frames and obtaining a product thereof.

5. The video signal processing apparatus according to claim 3, further comprising
an imaging device for right eye and an imaging device for left eye that photoelectrically convert subject light to generate a video signal.

6. The video signal processing apparatus according to claim 3, wherein
a plurality of kinds of values of the first threshold value and the second threshold value are provided to correspond to a size of a display apparatus to which the video signal output from the output signal control unit is input.

7. A video signal processing method, comprising:
generating edge extraction information indicating whether a pixel of interest is an edge part, with a video signal for left eye or a video signal for right eye being used as an input signal, the video signal for left eye being captured for a left eye, the video signal for right eye being captured for a right eye;
calculating, based on the video signal for left eye and the video signal for right eye, a parallax between a captured image for left eye that is formed of the video signal for left eye and a captured image for right eye that is formed of the video signal for right eye and generating a warning color image by superimposing a plurality of kinds of warning colors on respective pixels, the plurality of kinds of warning colors each being associated with a magnitude of the calculated parallax; and
outputting the warning color image in a case where the pixel of interest is the edge part, and outputting the video signal for left eye or the video signal for right eye in a case where the pixel of interest is not the edge part, based on the edge extraction information.

8. A video signal processing apparatus, which generates a video signal displayed by superimposing a warning color on a pixel, the warning color differing in accordance with an amount of the parallax, the pixel being determined to be an edge part and having a parallax that is a distance between a captured image for right eye and a captured image for left eye on a display screen and exceeds a predetermined range.
